# EUROPEAN PATENT APPLICATION

(11) **EP 4 674 541 A1**
(43) Date of publication of application: **07.01.2026**
(21) Application number: 24763462.9
(22) Date of filing: 30.01.2024
(51) Int. Cl.: B09B 3/70, B09B 3/80, B09B 101/30

(54) **METHOD FOR REUSING AND RECYCLING WASTE GENERATED FROM CEMENT PRODUCTION PROCESS, AND SYSTEM THEREFOR**

(30) Priority: 27.02.2023 JP 2023028162
(71) Applicant: Sumitomo Osaka Cement Co., Ltd., Tokyo, 105-8641 (JP)
(72) Inventor: MONNO, Takeshi, Tokyo 105-8641 (JP)
(74) Representative: Sonnenberg Harrison Partnerschaft mbB
(86) International application number: PCT/JP2024/002779
(87) International publication number: WO 2024/180977

(57) **Abstract**

Provided are a method for recycling and effectively using a waste emitted from a cement production process, in which calcium carbonate produced using a waste from a cement production process and hydrochloric acid produced in the process are effectively used for preparation of a vinyl chloride resin or the like, and a system that is useful for implementing the method. A method for reusing and recycling a waste generated from a cement production process, includes: electrodialyzing an aqueous solution containing potassium chloride to produce aqueous hydrochloric acid and an aqueous solution containing potassium hydroxide, the aqueous solution containing potassium chloride being obtained by washing chlorine bypass dust generated from a cement production step; adding a part of the aqueous hydrochloric acid to a calcium-containing waste to produce an aqueous solution containing a calcium ion; adjusting a pH of the aqueous solution containing a calcium ion and separating impurities; bringing carbon dioxide emitted from a cement production step into contact with the aqueous solution containing potassium hydroxide obtained through the electrodialysis to produce an aqueous solution containing potassium carbonate; and producing calcium carbonate and an aqueous solution containing potassium chloride using the aqueous solution containing a calcium ion having passed through the separation step and the potassium carbonate, in which a part of the aqueous hydrochloric acid obtained through the electrodialysis and the produced calcium carbonate are used for preparing a vinyl chloride resin or the like.

## Description

### Technical Field

The present invention relates to a method for reusing and recycling a waste generated from a cement production process and a system therefor, and particularly relates to the method for reusing and recycling a waste in which calcium carbonate can be produced from a waste generated from a cement production process, and the system that can effectively implement the method.

### Background Art

Calcium carbonate is used in various industrial fields of a filler such as a plastic, paper, or a coating material, a soil conditioner such as an agricultural chemical or a fertilizer, a food additive, a cosmetic raw material, and the like.

Calcium carbonate is synthesized by blowing carbon dioxide into a calcium hydroxide aqueous solution, or is synthesized by mixing an aqueous solution containing a calcium ion such as calcium chloride and a sodium carbonate aqueous solution.

Recently, as disclosed in Patent Literature No. 1, in order to reduce carbon dioxide that is a greenhouse gas, calcium carbonate may be produced in the process of fixing carbon dioxide. In Patent Literature No. 1, in order to supply a large amount of calcium or the like, a calcium-containing waste, for example, a waste material or rock such as a waste concrete or a steel slag is used.

In addition, in Patent Literature No. 1, as a method for dissolving calcium from the calcium-containing waste, nitric acid is used. In this stage, not only elution of calcium but also dissolution of another element such as magnesium occurs in an aqueous solution. Further, in Patent Literature No. 1, an aqueous solution of sodium carbonate produced by bringing sodium hydroxide and carbon dioxide into contact with each other is introduced into an aqueous solution containing calcium nitrate, magnesium nitrate, or the like such that calcium carbonate or magnesium carbonate is precipitated.

In addition, in order to generate nitric acid or sodium hydroxide, Patent Literature No. 1 also discloses that a bipolar membrane electrodialysis treatment is performed on sodium nitrate produced in a precipitation step of calcium carbonate or the like.

However, when the calcium-containing waste is used, the waste itself contains a large amount of impurities other than calcium, and there is a problem in that the purity of the produced calcium carbonate itself decreases.

In addition, for a vinyl chloride product, not only chlorine but also calcium carbonate as an extender are used, and production of calcium carbonate having a high purity as a filler for producing a plastic, for example, a vinyl chloride product is required.

On the other hand, in the cement production process, a waste such as a calcium-containing waste or chlorine bypass dust and exhaust gas of carbon dioxide are generated.

Recently, in order to reduce global environmental burden, it has been desired to effectively reuse a waste emitted from a cement production process, and it has also been desired to reduce emissions of carbon dioxide to the atmosphere to suppress global warming.

### Citation List

### Patent Literature

Patent Literature No. 1: Japanese Laid-open Patent Publication No. 2012-96975

### Summary of Invention

### Technical Problem

An object of the present invention is to solve the above-described problem and to provide: a method for recycling and effectively using a waste emitted from a cement production process, in which calcium carbonate is produced using a calcium-containing waste or carbon dioxide emitted from the cement production process and hydrochloric acid produced during the preparation of calcium carbonate is effectively used as a raw material or a filler of a vinyl chloride resin or a vinyl chloride resin product; and a system that is useful for implementing the method.

### Solution to Problem

In order to achieve the above-described object, the method for reusing and recycling a waste generated from a cement production process and the system therefor according to the present invention have the following technical features.
(1) A method for reusing and recycling a waste generated from a cement production process, the method including:
   an electrodialysis step of electrodialyzing an aqueous solution containing potassium chloride to produce aqueous hydrochloric acid and an aqueous solution containing potassium hydroxide, the aqueous solution containing potassium chloride being obtained by washing chlorine bypass dust generated during production of a cement with water;
   a calcium dissolution step of adding a part of the aqueous hydrochloric acid obtained in the electrodialysis step to a calcium-containing waste and dissolving calcium to produce an aqueous solution containing a calcium ion;
   a separation step of adjusting a hydrogen ion concentration index of the aqueous solution containing a calcium ion and separating a component containing at least one selected from the group consisting of Si, Al, Mg, and heavy metal from the aqueous solution containing a calcium ion;
   a potassium carbonate production step of bringing carbon dioxide emitted from a cement production process into contact with the aqueous solution containing potassium hydroxide produced through the electrodialysis to produce an aqueous solution containing potassium carbonate; and
   a calcium carbonate production and recovery step of producing calcium carbonate and an aqueous solution containing potassium chloride using the aqueous solution containing a calcium ion having passed through the separation step and the potassium carbonate, and recovering the calcium carbonate,
   in which a part of the aqueous hydrochloric acid obtained in the electrodialysis step is used for preparing a vinyl chloride resin, and the calcium carbonate obtained in the calcium carbonate production and recovery step is used as a filler of the vinyl chloride resin.
(2) A method for reusing and recycling a waste generated from a cement production process, the method including:
   an electrodialysis step of electrodialyzing an aqueous solution containing potassium chloride to produce aqueous hydrochloric acid and an aqueous solution containing potassium hydroxide, the aqueous solution containing potassium chloride being obtained by washing chlorine bypass dust generated during production of a cement with water;
   a calcium dissolution step of adding a part of the aqueous hydrochloric acid obtained in the electrodialysis step to a calcium-containing waste and dissolving calcium to produce an aqueous solution containing a calcium ion;
   a separation step of adjusting a hydrogen ion concentration index of the aqueous solution containing a calcium ion and separating a component containing at least one selected from the group consisting of Si, Al, Mg, and heavy metal from the aqueous solution containing a calcium ion;
   a pH adjustment step of adjusting a pH of the aqueous solution containing a calcium ion having passed through the separation step using the potassium hydroxide produced through the electrodialysis; and
   a calcium carbonate production and recovery step of producing calcium carbonate and an aqueous solution containing potassium chloride using the aqueous solution containing a calcium ion of which the pH is adjusted through the pH adjustment step and carbon dioxide emitted from a cement production process, and recovering the calcium carbonate,
   in which a part of the aqueous hydrochloric acid obtained in the electrodialysis step is used for preparing a vinyl chloride resin, and the calcium carbonate obtained in the calcium carbonate production and recovery step is used as a filler of the vinyl chloride resin.
(3) In the method for reusing and recycling a waste generated from a cement production process according to (1) or (2), it is preferable that the aqueous solution containing potassium chloride obtained in the calcium carbonate production and recovery step is electrodialyzed in the electrodialysis step or is used for washing the chlorine bypass dust generated during the production of the cement with water.
(4) In the method for reusing and recycling a waste generated from a cement production process according to (1) or (2), it is preferable that a waste generated during the preparation of the vinyl chloride resin is used as an alternative raw fuel in the cement production process.
(5) In the method for reusing and recycling a waste generated from a cement production process according to (1) or (2), it is preferable that the calcium-containing waste contains desalination dust obtained from a desalination bypass portion of a cement production facility.
(6) A system that is effective for implementing a method for reusing and recycling a waste generated from a cement production process according to another aspect of the present invention is a system for reusing and recycling a waste generated from a cement production process, the system including:
   electrodialysis means for electrodialyzing an aqueous solution containing potassium chloride to produce aqueous hydrochloric acid and an aqueous solution containing potassium hydroxide, the aqueous solution containing potassium chloride being obtained by washing chlorine bypass dust generated during production of a cement with water;
   calcium dissolution extraction means for adding a part of the aqueous hydrochloric acid obtained in the electrodialysis means to a calcium-containing waste and dissolving calcium to produce an aqueous solution containing a calcium ion;
   separation means for adjusting a hydrogen ion concentration index of the aqueous solution containing a calcium ion and separating a component containing at least one selected from the group consisting of Si, Al, Mg, and heavy metal from the aqueous solution containing a calcium ion;
   potassium carbonate production means for bringing carbon dioxide emitted from a cement production process into contact with the aqueous solution containing potassium hydroxide produced through the electrodialysis to produce an aqueous solution containing potassium carbonate; and
   calcium carbonate production and recovery means for producing calcium carbonate and an aqueous solution containing potassium chloride using the aqueous solution containing a calcium ion having passed through the separation means and the potassium carbonate, and recovering the calcium carbonate,
   in which a part of the aqueous hydrochloric acid obtained in the electrodialysis means is used for preparing a vinyl chloride resin, and the calcium carbonate obtained in the calcium carbonate production and recovery means is used as a filler of the vinyl chloride resin.
(7) A system that is effective for implementing a method for reusing and recycling a waste generated from a cement production process according to another aspect of the present invention, the system including:
   electrodialysis means for electrodialyzing an aqueous solution containing potassium chloride to produce aqueous hydrochloric acid and an aqueous solution containing potassium hydroxide, the aqueous solution containing potassium chloride being obtained by washing chlorine bypass dust generated during production of a cement with water;
   calcium dissolution extraction means for adding a part of the aqueous hydrochloric acid obtained in the electrodialysis means to a calcium-containing waste and dissolving calcium to produce an aqueous solution containing a calcium ion;
   separation means for adjusting a hydrogen ion concentration index of the aqueous solution containing a calcium ion and separating a component containing at least one selected from the group consisting of Si, Al, Mg, and heavy metal from the aqueous solution containing a calcium ion;
   pH adjustment means for adjusting a pH of the aqueous solution containing a calcium ion having passed through the separation means using the potassium hydroxide produced through the electrodialysis; and
   calcium carbonate production and recovery means for producing calcium carbonate and an aqueous solution containing potassium chloride using the aqueous solution containing a calcium ion of which the pH is adjusted through the pH adjustment means and carbon dioxide emitted from a cement production process, and recovering the calcium carbonate,
   in which a part of the aqueous hydrochloric acid obtained in the electrodialysis means is used for preparing a vinyl chloride resin, and the calcium carbonate obtained in the calcium carbonate production and recovery means is used as a filler of the vinyl chloride resin.
(8) In the system for reusing and recycling a waste generated from a cement production process according to (6) or (7), it is preferable that the aqueous solution containing potassium chloride obtained in the calcium carbonate production and recovery means is electrodialyzed in the electrodialysis means or is used for washing the chlorine bypass dust generated during the production of the cement with water.
(9) In the system for reusing and recycling a waste generated from a cement production process according to (6) or (7), it is preferable that a waste generated during the preparation of the vinyl chloride resin is used as an alternative raw fuel in the cement production process.
(10) In the system for reusing and recycling a waste generated from a cement production process according to (6) or (7), it is preferable that the calcium-containing waste contains desalination dust obtained from a desalination bypass portion of a cement production facility.

### Advantageous Effects of Invention

In the method for reusing and recycling a waste generated from a cement production process and the system therefor according to the present invention, carbon dioxide and a calcium-containing waste that are wastes emitted from a cement production facility can be used to produce calcium carbonate, emissions of carbon dioxide to the atmosphere and the amount of a waste can be reduced, and chlorine, calcium, and carbon dioxide can be recycled and used. Therefore, a reduction in environmental burden can be achieved.

In addition, the obtained calcium carbonate and hydrochloric acid produced in the step of preparing calcium carbonate in the method according to the present invention and the means therefor can be used as a raw material of a vinyl chloride resin or as a filler of a vinyl chloride resin product.

### Brief Description of Drawings

[FIG. 1] A schematic diagram illustrating an example of a method for reusing and recycling a waste generated from a cement production process according to the present invention.
[FIG. 2] A schematic diagram illustrating another example of the method for reusing and recycling a waste generated from a cement production process according to the present invention.
[FIG. 3] A schematic diagram illustrating still another example of the method for reusing and recycling a waste generated from a cement production process according to the present invention.
[FIG. 4] A schematic diagram illustrating still another example of the method for reusing and recycling a waste generated from a cement production process according to the present invention.
[FIG. 5] A graph illustrating a temporal change in Ca extraction rate in fly ash (FA1) collected in a general waste incineration facility A.
[FIG. 6] A graph illustrating a temporal change in K extraction rate in FA1.
[FIG. 7] A graph illustrating a temporal change in Cr extraction rate in FA1.
[FIG. 8] A graph illustrating a temporal change in Pb extraction rate in FA1.
[FIG. 9] A graph illustrating a temporal change in Si extraction rate in FA1.
[FIG. 10] A graph illustrating a temporal change in Al extraction rate in FA1.
[FIG. 11] A graph illustrating a temporal change in Mg extraction rate in FA1.
[FIG. 12] A graph illustrating a temporal change in Ca extraction rate in fly ash (FA2) collected in a general waste incineration facility B.
[FIG. 13] A graph illustrating a temporal change in Ca extraction rate in ready-mixed concrete sludge (CS1) collected in a drainage step of a ready-mixed concrete plant A.
[FIG. 14] A graph illustrating a temporal change in Ca extraction rate in ready-mixed concrete sludge (CS2) collected in a drainage step of a ready-mixed concrete plant B.

### Description of Embodiments

A method for reusing and recycling a waste generated from a cement production process and a system therefor according to the present invention will be described in detail using a preferred example with reference to the drawings.

Hereinafter, the method (system) refers to the method or the system for implementing the method, and a step (means) refers to the step or means for implementing the step.

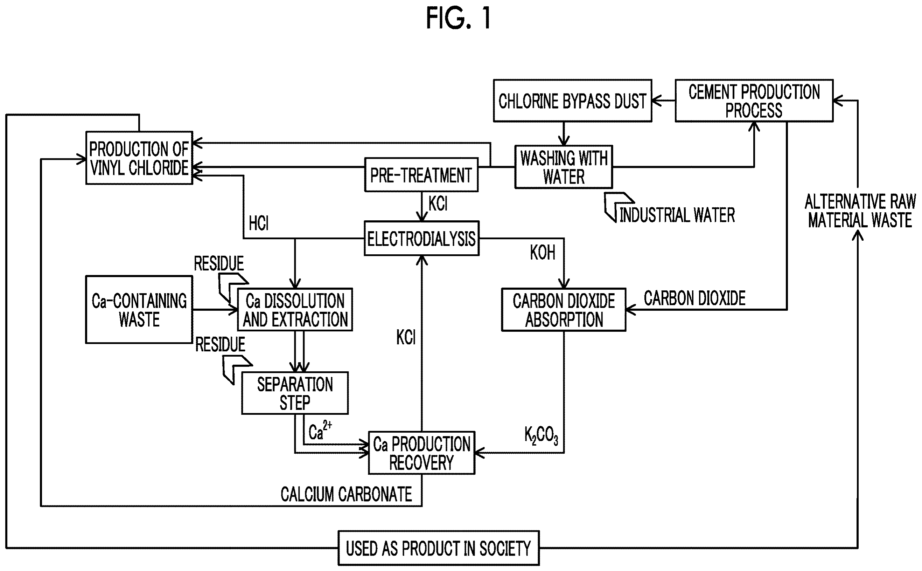

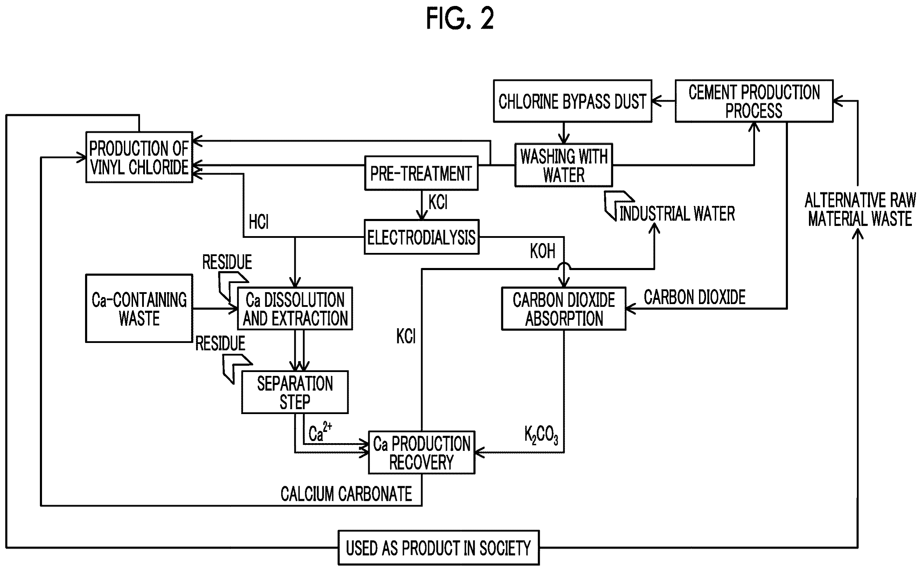

The method for reusing and recycling (system for reusing and recycling) a waste generated from a cement production process according to the present invention illustrated in FIGS. 1 and 2 will be described.

The method for reusing and recycling a waste generated from a cement production process according to the present invention illustrated in FIG. 1 or 2 includes:
an electrodialysis step of electrodialyzing an aqueous solution containing potassium chloride to produce aqueous hydrochloric acid and an aqueous solution containing potassium hydroxide, the aqueous solution containing potassium chloride being obtained by washing chlorine bypass dust generated during production of a cement with water;
a calcium dissolution extraction step of adding a part of the aqueous hydrochloric acid obtained in the electrodialysis step to a calcium-containing waste and dissolving calcium to produce an aqueous solution containing a calcium ion;
a separation step of adjusting a hydrogen ion concentration index of the aqueous solution containing a calcium ion and separating a component containing at least one selected from the group consisting of Si, Al, Mg, and heavy metal from the aqueous solution containing a calcium ion;
a potassium carbonate production step of bringing carbon dioxide emitted from a cement production process into contact with the aqueous solution containing potassium hydroxide produced through the electrodialysis to produce an aqueous solution containing potassium carbonate; and
a calcium carbonate production and recovery step of producing calcium carbonate and an aqueous solution containing potassium chloride using the aqueous solution containing a calcium ion having passed through the separation step and the potassium carbonate, and recovering the calcium carbonate,
in which a part of the aqueous hydrochloric acid obtained in the electrodialysis step is used for preparing a vinyl chloride resin, and the calcium carbonate obtained in the calcium carbonate production and recovery step is used as a filler of the vinyl chloride resin.

In addition, a system that is effective for implementing the above-described method for reusing and recycling a waste generated from a cement production process according to the present invention, is a system for reusing and recycling a waste generated from a cement production process, the system including:
electrodialysis means for electrodialyzing an aqueous solution containing potassium chloride to produce aqueous hydrochloric acid and an aqueous solution containing potassium hydroxide, the aqueous solution containing potassium chloride being obtained by washing chlorine bypass dust generated during production of a cement with water;
calcium dissolution extraction means for adding a part of the aqueous hydrochloric acid obtained in the electrodialysis means to a calcium-containing waste and dissolving calcium to produce an aqueous solution containing a calcium ion;
separation means for adjusting a hydrogen ion concentration index of the aqueous solution containing a calcium ion and separating a component containing at least one selected from the group consisting of Si, Al, Mg, and heavy metal from the aqueous solution containing a calcium ion;
potassium carbonate production means for bringing carbon dioxide emitted from a cement production process into contact with the aqueous solution containing potassium hydroxide produced through the electrodialysis to produce an aqueous solution containing potassium carbonate; and
calcium carbonate production and recovery means for producing calcium carbonate and an aqueous solution containing potassium chloride using the aqueous solution containing a calcium ion having passed through the separation means and the potassium carbonate, and recovering the calcium carbonate,
in which a part of the aqueous hydrochloric acid obtained in the electrodialysis means is used for preparing a vinyl chloride resin, and the calcium carbonate obtained in the calcium carbonate production and recovery means is used as a filler of the vinyl chloride resin.

A specific preferred example will be described below.

Chlorine bypass dust that is a waste emitted from a cement production process is washed with water to produce an aqueous solution containing potassium chloride. The desalination dust washed with water can also be dehydrated such that the dehydrated cake returns to a cement production process as a cement raw material.

In addition, preferably, a pre-treatment of removing impurities or the like in the aqueous solution containing potassium chloride can also be subsequently optionally performed.

The aqueous solution containing potassium chloride obtained by washing the chlorine bypass dust with water and, optionally, the aqueous solution containing potassium chloride on which the pre-treatment is performed are introduced into the electrodialysis step (electrodialysis means) described below. Preferably, optionally, a part of the aqueous solution containing potassium chloride can also be used for producing a vinyl chloride resin or a vinyl chloride resin product described below. For example, chlorine is produced by performing electrolysis or the like on the aqueous solution containing potassium chloride using any well-known method, and the produced chlorine is used for production of a vinyl chloride resin or a vinyl chloride resin product.

In addition, in FIG. 1, the aqueous solution containing potassium chloride produced in the calcium carbonate production and recovery step (calcium carbonate production means) (represented by "Ca production and recovery" in FIGS. 1 and 2) described below is recycled and joined with the potassium chloride aqueous solution obtained by washing the chlorine bypass dust with water to obtain the aqueous solution containing potassium chloride, and the electrodialysis step (electrodialysis means), for example, a bipolar membrane electrodialysis (BMED) treatment (BMED treatment means) is performed on the obtained aqueous solution containing potassium chloride to produce potassium hydroxide and hydrochloric acid (FIG. 1).

In addition, in FIG. 2, the aqueous solution containing potassium chloride produced in the calcium carbonate production and recovery step (calcium carbonate production means) described below is recycled and used as the aqueous solution with which the chlorine bypass dust is washed. In this case, even when the aqueous solution containing potassium chloride produced in the calcium carbonate production and recovery step (calcium carbonate production and recovery means) described below is used as the entire amount of the washing solution, the aqueous solution containing potassium chloride may be joined with industrial water to be used as the washing solution with which the chlorine bypass dust is washed. The electrodialysis step (electrodialysis means), for example, a bipolar membrane electrodialysis (BMED) treatment (BMED treatment means) is performed on the potassium chloride aqueous solution obtained by washing chlorine bypass dust with water to produce potassium hydroxide and hydrochloric acid (FIG. 2).

Preferably, as to the potassium chloride that is produced in the calcium carbonate production and recovery step (calcium carbonate production and recovery means) described below and recycled and used, optionally, a pre-treatment of, for example, removing fine particles through an MF membrane (microfiltration membrane) and concentrating the aqueous solution through a RO membrane (reverse osmosis membrane) can also be performed (not illustrated).

Next, the potassium chloride aqueous solution is introduced into the electrodialysis step (electrodialysis means), for example, a bipolar membrane electrodialysis (BMED) step (electrodialysis means) to produce aqueous hydrochloric acid and an aqueous solution containing potassium hydroxide. For example, the bipolar membrane electrodialysis (BMED) electrically operates such that, as the concentration of potassium chloride increases, the current efficiency is improved in the BMED, which contributes to power saving.

Next, a part of the aqueous hydrochloric acid obtained in the electrodialysis step (electrodialysis means) is introduced into the calcium dissolution extraction step (calcium dissolution extraction means). In the step (means), the aqueous hydrochloric acid is added to a calcium-containing waste and calcium is dissolved to produce an aqueous solution containing a calcium ion.

Examples of the calcium-containing waste that can be used include incinerated ash such as a general waste or an industrial waste, fly ash emitted from a thermal power plant or the like, slag, a waste concrete, and ready-mixed concrete sludge. In particular, a calcium-containing waste emitted from a cement production facility is used in the present invention.

Desalination dust emitted from a desalination bypass portion of a cement production process (cement production facility) contains a potassium chloride component, and can be used in the calcium dissolution extraction step (calcium dissolution extraction means). Therefore, the desalination dust can be suitably used in the present invention.

In addition, the calcium-containing waste contains sodium. Therefore, when the recycle use is continued as in FIG. 1 or 2, the Na ion concentration increases. Therefore, it is desirable that blowdown is performed in the middle of a path from the calcium production and recovery step (calcium production and recovery means) described below to the electrodialysis such that the Na ion concentration is fixed. On the other hand, during this blowdown, potassium chloride is also emitted. Therefore, potassium chloride (KCl) lacks in the method according to the present invention (system according to the present invention). In order to compensate for this lack, it is more effective to use the desalination dust containing potassium chloride as the Ca-containing waste.

The particle size of the calcium-containing waste is desirably adjusted to be 1000 µm or less and more preferably in a range of 100 µm or more and 500 µm or less. As a result, calcium can be easily extracted.

In the calcium dissolution extraction step (calcium dissolution extraction means), aqueous hydrochloric acid is added to the calcium-containing waste with the adjusted particle size, and calcium is dissolved to produce an aqueous solution containing a calcium ion. Preferably, it is desirable to adjust a hydrogen ion concentration index to be in a range of pH 0.5 or higher and 5 or lower.

As the aqueous hydrochloric acid, a part of aqueous hydrochloric acid obtained through the electrodialysis step (electrodialysis means) described below is used.

At this time, cleaning water may be optionally added. Cleaning is performed to replace a liquid in solid content with fresh water during solid-liquid separation.

A reaction time required for calcium extraction from the calcium-containing waste is 120 minutes or shorter and preferably in a range of 30 minutes or longer and 60 minutes or shorter. In addition, the dissolution and extraction can also be performed in multiple stages, in particular, in a multi-stage counter current.

The temperature of an aqueous solution containing hydrochloric acid during calcium extraction is preferably room temperature or higher and more preferably in a range of 20°C or higher and 70°C or lower. For example, since a membrane used in the electrodialysis such as the bipolar membrane electrodialysis (BMED) treatment is an organic membrane, it is desirable that the temperature of the aqueous solution is also set in consideration of the heat-resistant temperature of the membrane.

In the calcium dissolution extraction step (calcium dissolution extraction means), a residue and a calcium ion-containing aqueous solution are separated from each other, and the residue can be used as, for example, a cement raw material in a cement production facility.

Next, the aqueous solution containing a calcium ion obtained in the calcium dissolution extraction step (calcium dissolution extraction means) is introduced into the separation step (separation means). The aqueous solution containing a calcium ion contains an impurity ion other than calcium, and the impurity ion is separated by adjusting the hydrogen ion concentration index in the separation step (separation means).

Specifically, by adjusting the pH of the aqueous solution containing a calcium ion obtained in the calcium dissolution extraction step (calcium dissolution extraction means) to, for example, pH of 5 or higher and 6 or lower using potassium hydroxide, a Si or Al ion in the aqueous solution containing a calcium ion can be removed as a gel. In addition, optionally, cleaning water such as fresh water can also be added to clean solid content. This gel can be used as a cement raw material.

Further, by adjusting the pH of the calcium ion-containing aqueous solution from which the Si or Al ion is removed to, for example, pH of 7 or higher and 10 or lower using potassium hydroxide, heavy metal such as a Pb or Cr ion can be separated. In addition, optionally, cleaning water such as fresh water can also be added, and a solid content is cleaned by the cleaning.

Before removing the heavy metal, optionally, a coagulant can also be added to the calcium ion-containing aqueous solution. For example, a polymer coagulant or an inorganic coagulant can be used. Examples of the inorganic coagulant include an iron salt such as ferric polysulfate and an aluminum salt such as aluminum sulfate or aluminum polychloride. As the polymer coagulant, for example, an anionic, nonionic, or cationic coagulant that is suitable in terms of pH and particle properties may be used, and examples thereof include a polyacrylamide-based coagulant, a sodium polyacrylate-based coagulant, and a polyacrylic ester-based coagulant.

Further, by adjusting the pH of the calcium ion-containing aqueous solution from which the heavy metal ion is removed to pH of 11 or higher and 12 or lower, using sodium hydroxide or potassium hydroxide, an Mg ion in the aqueous solution can be removed as a gel. In addition, optionally, cleaning water such as fresh water can also be added, and a solid content is cleaned by the cleaning.

The obtained magnesium-containing gel can also be used as a magnesium hydroxide flame retardant.

The aqueous solution containing potassium carbonate prepared using a method described below is added to the calcium ion-containing aqueous solution from which unnecessary impurities are separated and removed that is obtained in the separation step (separation means). As a result, high-purity calcium carbonate is produced, and calcium carbonate and a potassium chloride aqueous solution are separated (calcium carbonate production and recovery step (calcium carbonate production and recovery means)).

For example, when the purity of the obtained calcium carbonate is calculated from weight loss at 550°C or higher and 800°C or lower using a thermal analysis equipment (TG), a value of 95.7% is obtained.

This way, in the present invention, the high-purity calcium carbonate containing no impurities such as magnesium carbonate can be obtained.

The obtained calcium carbonate can be used as a raw material or a filler such as a plastic, paper, or a coating material, a soil conditioner such as an agricultural chemical or a fertilizer, a food additive, a cosmetic raw material, a light reflection and scattering improver, an anti-blocking material, or the like. In the present invention, the obtained calcium carbonate can be suitably used as a filler of a vinyl chloride resin or a vinyl chloride resin product.

In addition, the calcium carbonate can also be used not only as a cement raw material but also as a cement extender.

In addition, a part of the aqueous hydrochloric acid produced in the electrodialysis step (electrodialysis means) can also be used for producing a vinyl chloride resin or a vinyl chloride resin product. At this time, optionally, it is desirable that the aqueous hydrochloric acid is concentrated and used.

In addition, as described above, the aqueous solution containing potassium chloride obtained by washing the chlorine bypass dust with water and a part of the aqueous solution containing potassium chloride that is optionally subsequently pretreated can also be used as aqueous hydrochloric acid for producing a vinyl chloride resin or a vinyl chloride resin product after performing, electrolysis or the like thereon.

This way, in the present invention, not only the obtained calcium carbonate but also chlorine can be used as a raw material for producing a vinyl chloride resin or a vinyl chloride resin product.

In addition, a method for preparing a vinyl chloride resin is not particularly limited, and any well-known method can be applied.

In addition, a waste vinyl chloride resin or a waste vinyl chloride resin product emitted during production of a vinyl chloride resin or a vinyl chloride resin product using a well-known method can be recycled and used as fuel (heat quantity) for a cement production process. Accordingly, carbon dioxide emitted from the cement production facility also contains carbon dioxide emitted during combustion of the waste vinyl chloride resin.

In addition, in the present invention illustrated in FIGS. 1 and 2, as the aqueous solution containing potassium carbonate used in the calcium carbonate production and recovery step (calcium carbonate production and recovery means), carbon dioxide is brought into contact with the aqueous solution containing potassium hydroxide obtained in the electrodialysis step (electrodialysis means) to absorb carbon dioxide, and the aqueous solution containing potassium carbonate is produced and used.

As to the carbon dioxide, carbon dioxide in combustion exhaust gas from a thermal power plant or the like or in exhaust gas from a cement production facility can be used, and carbon dioxide in the atmosphere can also be directly absorbed and used. In the present invention, carbon dioxide emitted from the cement production process can be effectively used. As a result, carbon dioxide can be recycled and used to reduce the environmental burden.

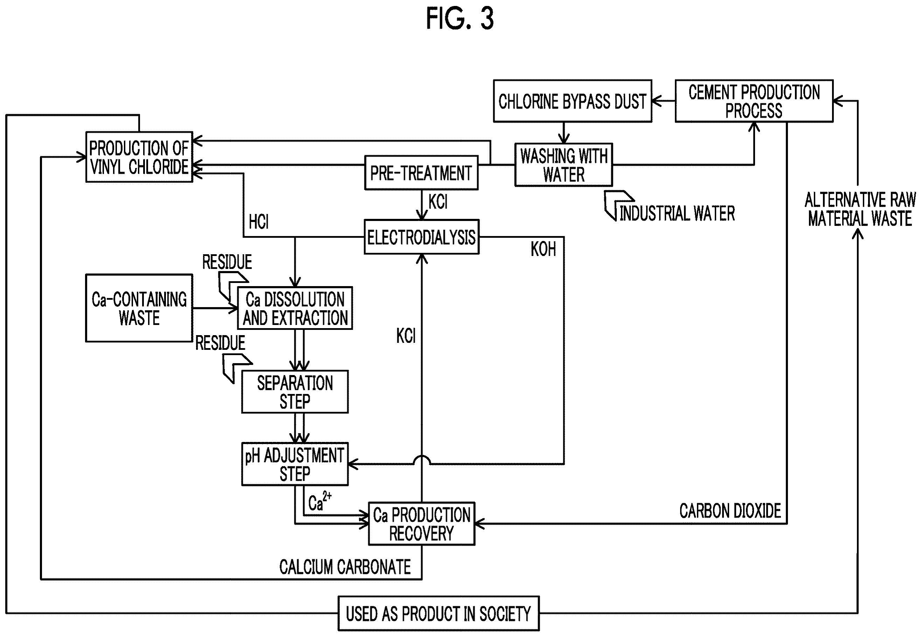

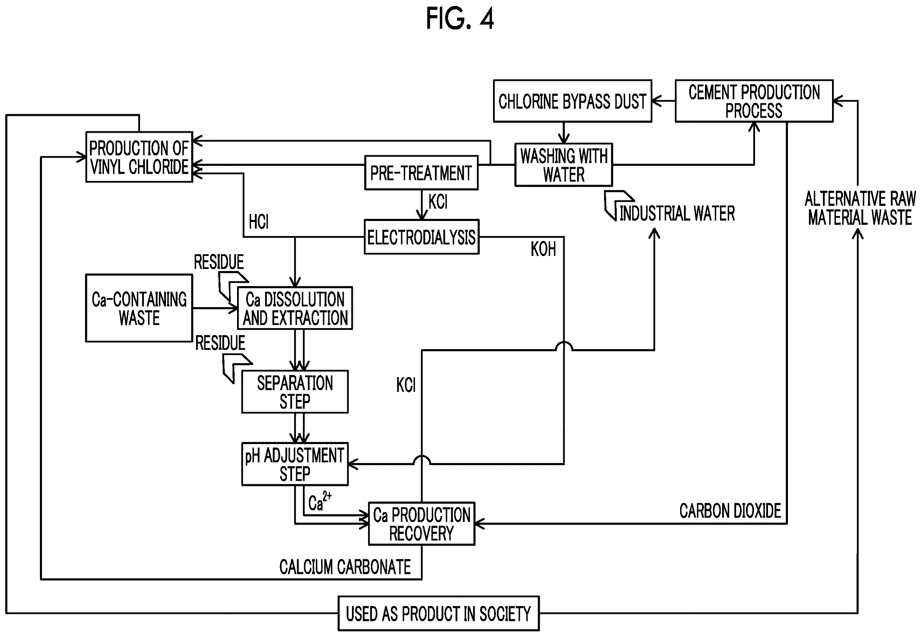

Next, a method for reusing and recycling (system for reusing and recycling) a waste generated from a cement production process according to another example of the present invention of FIGS. 3 and 4 will be described.

The method for reusing and recycling a waste generated from a cement production process according to the other example of the present invention illustrated in FIG. 3 or 4 includes:
an electrodialysis step of electrodialyzing an aqueous solution containing potassium chloride to produce aqueous hydrochloric acid and an aqueous solution containing potassium hydroxide, the aqueous solution containing potassium chloride being obtained by washing chlorine bypass dust generated during production of a cement with water;
a calcium dissolution step of adding a part of the aqueous hydrochloric acid obtained in the electrodialysis step to a calcium-containing waste and dissolving calcium to produce an aqueous solution containing a calcium ion;
a separation step of adjusting a hydrogen ion concentration index of the aqueous solution containing a calcium ion and separating a component containing at least one selected from the group consisting of Si, Al, Mg, and heavy metal from the aqueous solution containing a calcium ion;
a pH adjustment step of adjusting a pH of the aqueous solution containing a calcium ion having passed through the separation step using the potassium hydroxide produced through the electrodialysis; and
a calcium carbonate production and recovery step of producing calcium carbonate and an aqueous solution containing potassium chloride using the aqueous solution containing a calcium ion of which the pH is adjusted through the pH adjustment step and carbon dioxide emitted from a cement production process, and recovering the calcium carbonate,
in which a part of the aqueous hydrochloric acid obtained in the electrodialysis step is used for preparing a vinyl chloride resin, and the calcium carbonate obtained in the calcium carbonate production and recovery step is used as a filler of the vinyl chloride resin.

In addition, a system that is effective for implementing the method for reusing and recycling a waste generated from a cement production process, is a system for reusing and recycling a waste generated from a cement production process according to the other example of the present invention illustrated in FIGS. 3 and 4, the system including:
electrodialysis means for electrodialyzing an aqueous solution containing potassium chloride to produce aqueous hydrochloric acid and an aqueous solution containing potassium hydroxide, the aqueous solution containing potassium chloride being obtained by washing chlorine bypass dust generated during production of a cement with water;
calcium dissolution extraction means for adding a part of the aqueous hydrochloric acid obtained in the electrodialysis means to a calcium-containing waste and dissolving calcium to produce an aqueous solution containing a calcium ion;
separation means for adjusting a hydrogen ion concentration index of the aqueous solution containing a calcium ion and separating a component containing at least one selected from the group consisting of Si, Al, Mg, and heavy metal from the aqueous solution containing a calcium ion;
pH adjustment means for adjusting a pH of the aqueous solution containing a calcium ion having passed through the separation means using the potassium hydroxide produced through the electrodialysis; and
calcium carbonate production and recovery means for producing calcium carbonate and an aqueous solution containing potassium chloride using the aqueous solution containing a calcium ion of which the pH is adjusted through the pH adjustment means and carbon dioxide emitted from a cement production process, and recovering the calcium carbonate,
in which a part of the aqueous hydrochloric acid obtained in the electrodialysis means is used for preparing a vinyl chloride resin, and the calcium carbonate obtained in the calcium carbonate production and recovery means is used as a filler of the vinyl chloride resin.

A specific preferred example will be described below.

In the method for reusing and recycling (system for reusing and recycling) a waste generated from a cement production process according to the other example of the present invention illustrated in FIGS. 3 and 4, as in the method for reusing and recycling (system for reusing and recycling) a waste generated from a cement production process of FIGS. 1 and 2, chlorine bypass dust that is a waste emitted from a cement production process is washed with water to produce an aqueous solution containing potassium chloride. The desalination dust washed with water can also be dehydrated such that the dehydrated cake returns to a cement production process as a cement raw material.

In addition, preferably, a pre-treatment of removing impurities or the like in the aqueous solution containing potassium chloride can also be subsequently optionally performed.

The aqueous solution containing potassium chloride obtained by washing the chlorine bypass dust with water and the aqueous solution containing potassium chloride obtained by washing the chlorine bypass dust with water and, optionally, the aqueous solution containing potassium chloride on which the pre-treatment is performed are introduced into the electrodialysis step (electrodialysis means) described below. Preferably, optionally, a part of the aqueous solution containing potassium chloride can also be used for producing a vinyl chloride resin or a vinyl chloride resin product described below. For example, chlorine is produced by performing electrolysis or the like on the aqueous solution containing potassium chloride using any well-known method, and the produced chlorine is used for production of a vinyl chloride resin or a vinyl chloride resin product.

In addition, in FIG. 3, as in FIG. 1, the aqueous solution containing potassium chloride produced in the calcium carbonate production and recovery step (calcium carbonate production and recovery means) (represented by "Ca production and recovery" in FIG. 3) described below is recycled and joined with the potassium chloride aqueous solution obtained by washing the chlorine bypass dust with water to obtain the aqueous solution containing potassium chloride, and the electrodialysis step (electrodialysis means), for example, a bipolar membrane electrodialysis (BMED) treatment (BMED means) is performed on the obtained aqueous solution containing potassium chloride to produce potassium hydroxide and hydrochloric acid (FIG. 1).

In addition, in FIG. 4, the aqueous solution containing potassium chloride produced in the calcium carbonate production and recovery step (calcium carbonate production and recovery means) described below is recycled and used as the aqueous solution with which the chlorine bypass dust is washed. In this case, even when the aqueous solution containing potassium chloride produced in the calcium carbonate production and recovery step (calcium carbonate production and recovery means) described below is used as the entire amount of the washing solution, the aqueous solution containing potassium chloride may be joined with industrial water to be used as the washing solution with which the chlorine bypass dust is washed. The electrodialysis step (electrodialysis means), for example, a bipolar membrane electrodialysis (BMED) treatment (BMED means) is performed on the potassium chloride aqueous solution obtained by washing chlorine bypass dust with water to produce potassium hydroxide and hydrochloric acid (FIG. 4).

Preferably, as to the potassium chloride that is produced in the calcium carbonate production and recovery step (calcium carbonate production and recovery means), optionally, a pre-treatment of, for example, removing fine particles through an MF membrane (microfiltration membrane) and concentrating the aqueous solution through a RO membrane (reverse osmosis membrane) can also be performed (not illustrated).

Next, the potassium chloride aqueous solution is introduced into the electrodialysis step (electrodialysis means), for example, a bipolar membrane electrodialysis (BMED) step (electrodialysis means) to produce aqueous hydrochloric acid and an aqueous solution containing potassium hydroxide. For example, the bipolar membrane electrodialysis (BMED) electrically operates such that, as the concentration of potassium chloride increases, the current efficiency is improved in the BMED, which contributes to power saving.

The electrodialysis step (electrodialysis means), the calcium dissolution extraction step (dissolution extraction means), and the separation step (separation means) in the method for reusing and recycling (system for reusing and recycling) a waste generated from a cement production process according to the other example of the present invention illustrated in FIGS. 3 and 4 are the same as those of the method for reusing and recycling (system for reusing and recycling) a waste generated from a cement production process illustrated in FIGS. 1 and 2.

The calcium-containing aqueous solution obtained in the separation step (separation means) in FIGS. 3 and 4 is further introduced into the pH adjustment step (pH adjustment means) to adjust the pH to be alkaline, preferably, strongly alkaline. The pH is, for example, 11 or higher and 13 or lower, preferably 12 or higher and 13 or lower, and more preferably 13 or higher.

At this time, potassium hydroxide obtained in the electrodialysis step (electrodialysis means) can be used as a pH adjuster.

Next, the calcium ion-containing aqueous solution adjusted to be alkaline, preferably, strongly alkaline that is obtained in the pH adjustment step (pH adjustment means) and carbon dioxide emitted from the cement production process (cement production facility) are mixed and brought into contact with each other. As a result, high-purity calcium carbonate is produced, and calcium carbonate and a potassium chloride aqueous solution are separated (calcium carbonate production and recovery step (calcium carbonate production and recovery means)).

At this time, in the calcium carbonate production and recovery step (calcium carbonate production and recovery means), it is desirable that the pH at which the calcium ion-containing aqueous solution and the carbon dioxide are brought into contact with each other and react with each other is maintained at pH 10 or higher and 11 or lower. The reason for this is presumed to be that, with the reaction in the pH range, production of calcium hydrogencarbonate that is a by-product can be suppressed, and the purity of the obtained calcium carbonate can be maintained to be high.

For example, when the purity of the obtained calcium carbonate is calculated from weight loss at 550°C or higher and 800°C or lower using a thermal analysis equipment (TG), a value of 95.7% is obtained.

This way, in the present invention, the high-purity calcium carbonate containing no impurities such as magnesium carbonate can be obtained.

In addition, as to the carbon dioxide used in the calcium carbonate production and recovery step (calcium carbonate production and recovery means), carbon dioxide in combustion exhaust gas from a thermal power plant or the like or in exhaust gas from a cement production facility can be used, and carbon dioxide in the atmosphere can also be directly absorbed and used. In the present invention, it is preferable that carbon dioxide emitted from the cement production process (cement production facility) is effectively used, and thus carbon dioxide can be recycled and used to reduce the environmental burden.

The obtained calcium carbonate can be used as a filler such as a plastic, paper, or a coating material, a soil conditioner such as an agricultural chemical or a fertilizer, a food additive, a cosmetic raw material, a light reflection and scattering improver, an anti-blocking material, or the like as described above. In the present invention, the obtained calcium carbonate can be suitably used as a filler of a vinyl chloride resin or a vinyl chloride resin product.

In addition, the calcium carbonate can also be used not only as a cement raw material but also as a cement extender.

In addition, a part of the aqueous hydrochloric acid produced in the electrodialysis step (electrodialysis means) can also be used for producing a vinyl chloride resin or a vinyl chloride resin product. At this time, optionally, it is desirable that the aqueous hydrochloric acid is concentrated and used.

In addition, as described above, the aqueous solution containing potassium chloride obtained by washing the chlorine bypass dust with water and a part of the aqueous solution containing potassium chloride that is optionally subsequently pretreated can also be used as aqueous hydrochloric acid for producing a vinyl chloride resin or a vinyl chloride resin product after performing, electrolysis or the like thereon.

This way, in the present invention, not only the obtained calcium carbonate but also chlorine can be used as a raw material for producing a vinyl chloride resin or a vinyl chloride resin product.

A method for preparing a vinyl chloride resin is not particularly limited, and any well-known method can be applied.

In addition, a waste vinyl chloride resin or a waste vinyl chloride resin product emitted during preparation of a vinyl chloride resin using a well-known method can be recycled and used as fuel (heat quantity) for a cement production process. Accordingly, carbon dioxide emitted from the cement production process (cement production facility) described below also contains carbon dioxide emitted during combustion of the waste vinyl chloride resin.

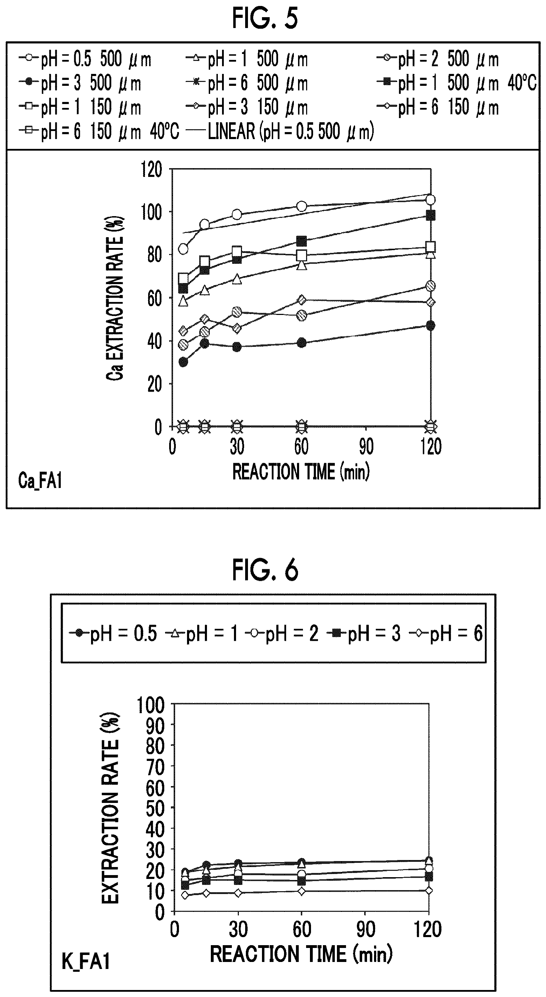

FIGS. 5 to 11 are graphs illustrating temporal changes in extraction rates of Ca and the like in fly ash (FA1) collected in a general waste incineration facility A. The extraction rate refers to "a ratio of the amount of a dissolved component to the total amount of components in the waste".

When the particle size of the fly ash is set as 150 µm (only in FIG. 5) or 500 µm, the temperature of the aqueous solution is room temperature (20°C) or 40°C (only in FIG. 5), and the hydrogen ion concentration index is set as pH of 0.5, 1, 2, 3, or 6, the extraction rate is measured.

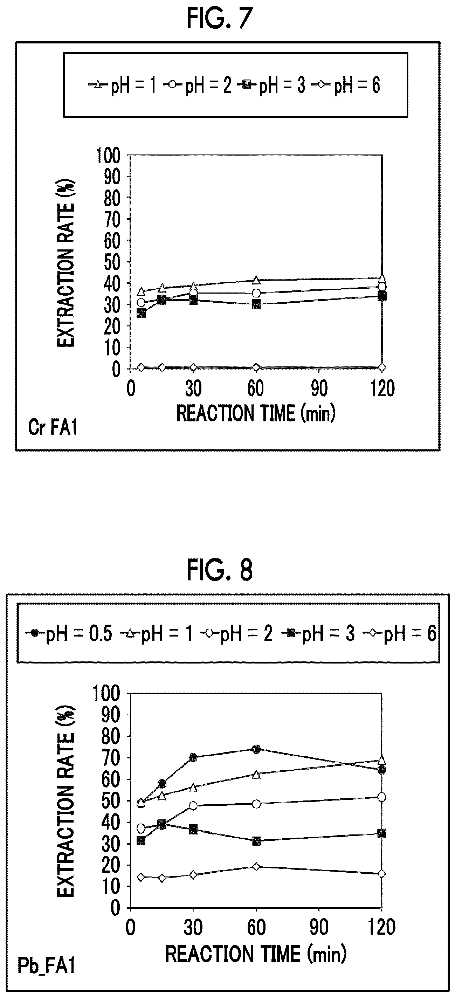

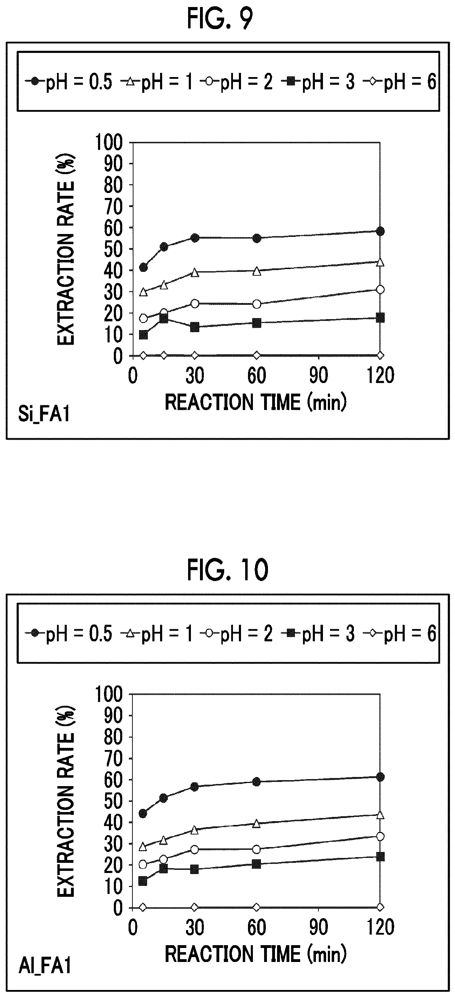

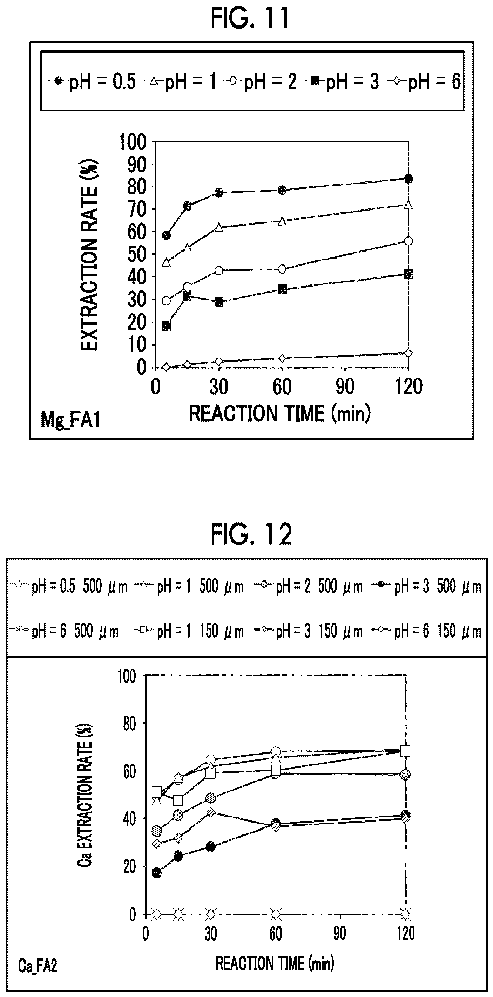

FIG. 5 illustrates calcium (Ca), FIG. 6 illustrates potassium (K), FIG. 7 illustrates chromium (Cr), FIG. 8 illustrates lead (Pb), FIG. 9 illustrates silicon (Si), FIG. 10 illustrates aluminum (Al), and FIG. 11 illustrates magnesium (Mg).

Referring to FIG. 5, the pH required for the Ca extraction is 3 or lower.

The Ca extraction rate shows a gradual change depending on the reaction time (elapsed time) after 30 minutes, particularly, after 60 minutes, and it is understood that the Ca dissolution and extraction is almost completed after 30 minutes.

In addition, as a general tendency, when the case where the pH is 1 and the case where the pH is 3 are compared, it is understood that the extraction rate increases as the particle size decreases, and when the cases where the pH is 1 are compared, it is understood that the extraction rate increases as the temperature of the aqueous solution increases.

Referring to FIGS. 6 to 11, when the pH is 3 or lower, all of K, Cr, Pb, Si, Al, and Mg show sufficient dissolution after 30 minutes. Therefore, it is essential to remove these impurity ions more effectively than Ca.

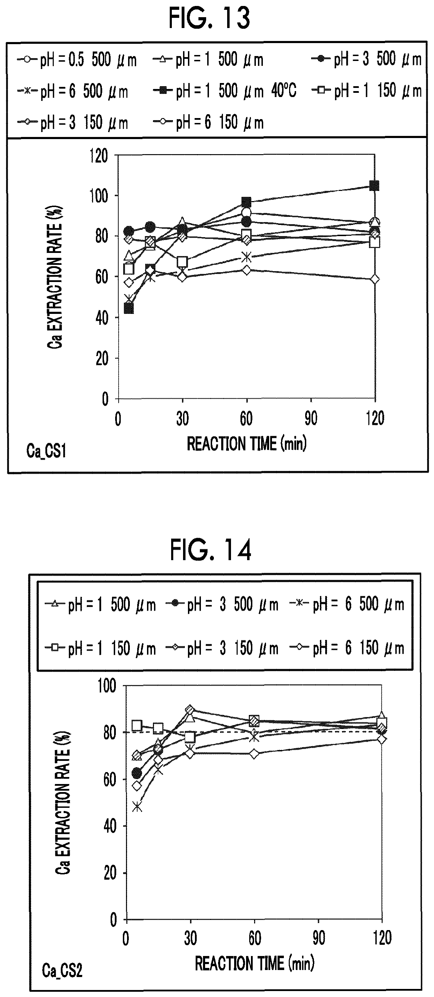

FIGS. 12 to 14 are graphs illustrating temporal changes in Ca extraction rates of samples, in which FIG. 12 illustrates fly ash (FA2) collected from a general waste incineration facility B, FIG. 13 illustrates ready-mixed concrete sludge (CS1) collected from a drainage step of a ready-mixed concrete plant A, and FIG. 14 illustrates ready-mixed concrete sludge (CS2) collected from a drainage step of a ready-mixed concrete plant B.

The pH of the aqueous solution is set as 0.5, 1, 3, or 6, the particle size is set as 150 µm or 500 µm, and the aqueous solution temperature is set as room temperature (20°C) or 40°C.

As to the fly ash of FIG. 12, as in FIG. 3, when the pH is 3 or lower and preferably pH 1 or lower, the Ca extraction rate increases.

As to the ready-mixed concrete sludge of FIG. 13 or FIG. 14, when the pH is 6 or lower, the Ca extraction rate also increases.

Even after 30 minutes, the change in extraction rate becomes gradual. In addition, when the particle size is small and when the temperature of the aqueous solution is high, the dissolution rate tends to increase.

### Industrial Applicability

According to the present invention, carbon dioxide or a calcium-containing waste emitted from a cement production process can be effectively used to produce calcium carbonate with high purity, and calcium carbonate or hydrochloric acid obtained in the present invention can be used as a raw material or a filler of a vinyl chloride resin or a vinyl chloride resin product. In addition, waste vinyl chloride can be used as fuel in a cement production process, chlorine, calcium, and carbon dioxide can be recycled and effectively used, and a reduction in environmental burden can be achieved.

In addition, the obtained residue can also be used as a cement raw material or the like.

## Claims

1. A method for reusing and recycling a waste generated from a cement production process, the method comprising:
an electrodialysis step of electrodialyzing an aqueous solution containing potassium chloride to produce aqueous hydrochloric acid and an aqueous solution containing potassium hydroxide, the aqueous solution containing potassium chloride being obtained by washing chlorine bypass dust generated during production of a cement with water;
a calcium dissolution step of adding a part of the aqueous hydrochloric acid obtained in the electrodialysis step to a calcium-containing waste and dissolving calcium to produce an aqueous solution containing a calcium ion;
a separation step of adjusting a hydrogen ion concentration index of the aqueous solution containing a calcium ion and separating a component containing at least one selected from the group consisting of Si, Al, Mg, and heavy metal from the aqueous solution containing a calcium ion;
a potassium carbonate production step of bringing carbon dioxide emitted from a cement production process into contact with the aqueous solution containing potassium hydroxide produced through the electrodialysis to produce an aqueous solution containing potassium carbonate; and
a calcium carbonate production and recovery step of producing calcium carbonate and an aqueous solution containing potassium chloride using the aqueous solution containing a calcium ion having passed through the separation step and the potassium carbonate, and recovering the calcium carbonate,
wherein a part of the aqueous hydrochloric acid obtained in the electrodialysis step is used for preparing a vinyl chloride resin, and the calcium carbonate obtained in the calcium carbonate production and recovery step is used as a filler of the vinyl chloride resin.

2. A method for reusing and recycling a waste generated from a cement production process, the method comprising:
an electrodialysis step of electrodialyzing an aqueous solution containing potassium chloride to produce aqueous hydrochloric acid and an aqueous solution containing potassium hydroxide, the aqueous solution containing potassium chloride being obtained by washing chlorine bypass dust generated during production of a cement with water;
a calcium dissolution step of adding a part of the aqueous hydrochloric acid obtained in the electrodialysis step to a calcium-containing waste and dissolving calcium to produce an aqueous solution containing a calcium ion;
a separation step of adjusting a hydrogen ion concentration index of the aqueous solution containing a calcium ion and separating a component containing at least one selected from the group consisting of Si, Al, Mg, and heavy metal from the aqueous solution containing a calcium ion;
a pH adjustment step of adjusting a pH of the aqueous solution containing a calcium ion having passed through the separation step using the potassium hydroxide produced through the electrodialysis; and
a calcium carbonate production and recovery step of producing calcium carbonate and an aqueous solution containing potassium chloride using the aqueous solution containing a calcium ion of which the pH is adjusted through the pH adjustment step and carbon dioxide emitted from a cement production process, and recovering the calcium carbonate,
wherein a part of the aqueous hydrochloric acid obtained in the electrodialysis step is used for preparing a vinyl chloride resin, and the calcium carbonate obtained in the calcium carbonate production and recovery step is used as a filler of the vinyl chloride resin.

3. The method for reusing and recycling a waste generated from a cement production process according to Claim 1 or 2,
wherein the aqueous solution containing potassium chloride obtained in the calcium carbonate production and recovery step is electrodialyzed in the electrodialysis step or is used for washing the chlorine bypass dust generated during the production of the cement with water.

4. The method for reusing and recycling a waste generated from a cement production process according to Claim 1 or 2,
wherein a waste generated during the preparation of the vinyl chloride resin is used as an alternative raw fuel in the cement production process.

5. The method for reusing and recycling a waste generated from a cement production process according to Claim 1 or 2,
wherein the calcium-containing waste contains desalination dust obtained from a desalination bypass portion of a cement production facility.

6. A system for reusing and recycling a waste generated from a cement production process, the system comprising:
electrodialysis means for electrodialyzing an aqueous solution containing potassium chloride to produce aqueous hydrochloric acid and an aqueous solution containing potassium hydroxide, the aqueous solution containing potassium chloride being obtained by washing chlorine bypass dust generated during production of a cement with water;
calcium dissolution extraction means for adding a part of the aqueous hydrochloric acid obtained in the electrodialysis means to a calcium-containing waste and dissolving calcium to produce an aqueous solution containing a calcium ion;
separation means for adjusting a hydrogen ion concentration index of the aqueous solution containing a calcium ion and separating a component containing at least one selected from the group consisting of Si, Al, Mg, and heavy metal from the aqueous solution containing a calcium ion;
potassium carbonate production means for bringing carbon dioxide emitted from a cement production process into contact with the aqueous solution containing potassium hydroxide produced through the electrodialysis to produce an aqueous solution containing potassium carbonate; and
calcium carbonate production and recovery means for producing calcium carbonate and an aqueous solution containing potassium chloride using the aqueous solution containing a calcium ion having passed through the separation means and the potassium carbonate, and recovering the calcium carbonate,
wherein a part of the aqueous hydrochloric acid obtained in the electrodialysis means is used for preparing a vinyl chloride resin, and the calcium carbonate obtained in the calcium carbonate production and recovery means is used as a filler of the vinyl chloride resin.

7. A system for reusing and recycling a waste generated from a cement production process, the system comprising:
electrodialysis means for electrodialyzing an aqueous solution containing potassium chloride to produce aqueous hydrochloric acid and an aqueous solution containing potassium hydroxide, the aqueous solution containing potassium chloride being obtained by washing chlorine bypass dust generated during production of a cement with water;
calcium dissolution extraction means for adding a part of the aqueous hydrochloric acid obtained in the electrodialysis means to a calcium-containing waste and dissolving calcium to produce an aqueous solution containing a calcium ion;
separation means for adjusting a hydrogen ion concentration index of the aqueous solution containing a calcium ion and separating a component containing at least one selected from the group consisting of Si, Al, Mg, and heavy metal from the aqueous solution containing a calcium ion;
pH adjustment means for adjusting a pH of the aqueous solution containing a calcium ion having passed through the separation means using the potassium hydroxide produced through the electrodialysis; and
calcium carbonate production and recovery means for producing calcium carbonate and an aqueous solution containing potassium chloride using the aqueous solution containing a calcium ion of which the pH is adjusted through the pH adjustment means and carbon dioxide emitted from a cement production process, and recovering the calcium carbonate,
wherein a part of the aqueous hydrochloric acid obtained in the electrodialysis means is used for preparing a vinyl chloride resin, and the calcium carbonate obtained in the calcium carbonate production and recovery means is used as a filler of the vinyl chloride resin.

8. The system for reusing and recycling a waste generated from a cement production process according to Claim 6 or 7,
wherein the aqueous solution containing potassium chloride obtained in the calcium carbonate production and recovery means is electrodialyzed in the electrodialysis means or is used for washing the chlorine bypass dust generated during the production of the cement with water.

9. The system for reusing and recycling a waste generated from a cement production process according to Claim 6 or 7,
wherein a waste generated during the preparation of the vinyl chloride resin is used as an alternative raw fuel in the cement production process.

10. The system for reusing and recycling a waste generated from a cement production process according to Claim 6 or 7,
wherein the calcium-containing waste contains desalination dust obtained from a desalination bypass portion of a cement production facility.
